# EUROPEAN PATENT SPECIFICATION

(11) **EP 3 933 832 B1**
(45) Date of publication and mention of the grant of the patent: **06.11.2024**
(21) Application number: 20183730.9
(22) Date of filing: 02.07.2020
(51) Int. Cl.: G10L 17/26, G06F 21/32, G10L 25/51, G10L 25/30, G06N 3/08

(54) **A METHOD AND A SPEECH-BASED SYSTEM FOR AUTOMATICALLY DETECTING SYNTHESIZED OR NATURAL SPEECH IN A SPEECH-BASED SYSTEM AND A COMPUTER PROGRAM**
VERFAHREN UND SPRACHBASIERTES SYSTEM ZUR AUTOMATISCHEN ERKENNUNG VON SYNTHETISIERTER ODER NATÜRLICHER SPRACHE IN EINEM SPRACHBASIERTEN SYSTEM UND COMPUTERPROGRAMM
PROCÉDÉ ET SYSTÈME À COMMANDE VOCALE POUR LA DÉTECTION AUTOMATIQUE DE PAROLE SYNTHÉTISÉE OU NATURELLE DANS UN SYSTÈME À COMMANDE VOCALE ET PROGRAMME INFORMATIQUE

(43) Date of publication of application: 05.01.2022
(73) Proprietor: Deutsche Telekom AG, 53113 Bonn (DE)
(72) Inventor: LANG, Andreas, 01257 Dresden (DE); RAHM, Thomas, 01640 Coswig (DE); WESTERBECK, Nico, 01219 Dresden (DE)
(74) Representative: Blumbach · Zinngrebe Patentanwälte PartG mbB

(56) References cited:
- EP-A1- 2 843 660
- CN-A- 110 491 391
- US-A1- 2020 043 515

## Description

### Technical Field of the Invention

The present invention relates to speech-based systems for automatically detecting synthesized or natural speech.

### Background of the Invention

Nowadays sophisticated speech synthesis algorithms are available on the market, which has opened a window for criminals or deceivers to leverage speech synthesis technologies such as Tacotron from Google to artificially fake voices with an arbitrary speaker and extreme quality up to indistinguishable from voices of a real human being. Using artificially faked voices represents a real danger to perform social engineering attacks through telephone on companies.

US 2020/0043515 A1 discloses an apparatus that includes a microphone and a processor. The processor is configured to receive, via the microphone, audio comprising voice of a person, and determine whether the received audio is an actual voice or a synthesized voice. The apparatus also provides a first notification indicating that the received audio is the actual voice an a second notification indicating that the received audio is the synthesized voice.

EP 2 843 660 A1 discloses a method and an apparatus for detecting synthesized speech. The method and apparatus include extracting a plurality of speech features from multiple segments of the speech signal, analyzing the plurality of speech features to determine whether the plurality of speech features exhibit periodic variation behavior and determining whether the speech signal is a synthetic speech signal or a natural speech signal on whether or not a periodic variation behavior of the plurality of speech features is detected.

Therefore, it is an object of the present invention to provide countermeasures against the threat of using artificially faked voices generated by a speech synthesized algorithm.

### Summary of the Invention

The technical problem is solved by the features of independent claims 1 and 6.

Preferred embodiments are set forth in the dependent claims.

The term "speech-based system" preferably defines a system that may be configured to transmit speech signals from a source entity, e.g. a calling party, to a destination entity, e.g. a called party, and to process speech signals cutted in signal portions to detect synthesized or natural speech.

### Brief Description of the Drawings

Exemplary embodiments are described and illustrated in conjunction with the accompanying drawings.
- Fig. 1: is a block diagram of an exemplary speech-based system configured for automatically detecting synthesized or natural speech, which is not part of the claimed invention,
- Fig. 2: is a block diagram of a further exemplary speech-based system for automatically detecting synthesized or natural speech, and
- Fig. 3: is a block diagram of another exemplary speech-based system configured for automatically detecting synthesized or natural speech.

### Detailed Description

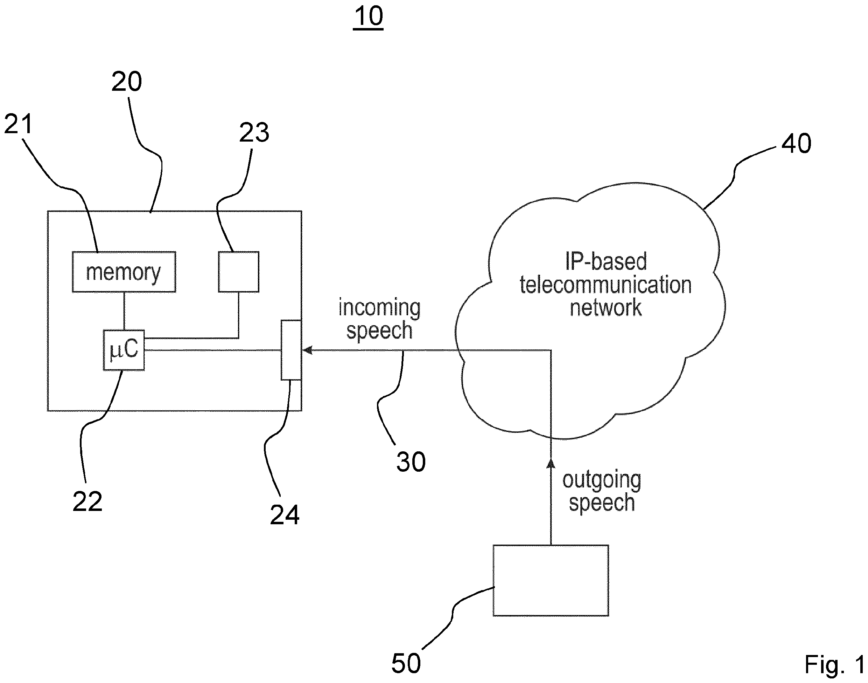

At first, an exemplary classification algorithm is considered, which can be integrated into speech-based systems as shown in figures 1 to 3, for example. The classification algorithm, if executed by a data processing unit, determines or infers whether a speech signal destined for a destination entity, for example a called party of a telecommunication system, is a synthetic or natural speech signal.

The classification algorithm may be trained by performing a supervised machine learning as is known from the artificial network technology. In particular, the classification algorithm is trained by using a plurality of first training sets of data, wherein each first training set of data represents a portion of a known synthesized speech signal and by using a plurality of second training sets of data, wherein each second training set of data represents a portion of a known natural speech signal. Each signal portion has a predetermined duration, which takes for example 1 second. With other words, each first training set of data may represent a synthesized speech snippet, wherein each second training set of data may represent a natural speech snippet of a human being.

It is to be noted, that each first and each second training set of data can represent the same speech features. For example a mel-frequency cepstrum can be used as the common speech feature. In this case, the speech signals to be checked are converted by executing a time-frequency transformation.

A supervised machine learning has the aim to train the classification algorithm such that it is able to evaluate a first predefined index value, whenever one of the plurality of the first training sets of data is used, thereby indicating a synthetic speech, and to evaluate a second predefined index value, whenever one of the plurality of second training sets of data is used, thereby indicating a natural speech. For example the first predefined index value is 0, wherein the second predefined index value is 1.

The classification algorithm can be implemented as a multilayer feedforward neural network and in particular by a two-layer feedforward neural network, wherein each layer comprises a plurality of artificial neurons, for example 64 artificial neurons.

A plurality of different applications are conceivable, which may use the trained classification algorithm to determine whether a speech signal is a synthetic or natural speech signal.

Now, different exemplary speech-based systems are illustrated, which are configured to may execute the trained classification algorithm for automatically detecting synthesized or natural speech for example during a telephone conversation between a calling party and a called party connected to a telecommunication network.

Referring now to figure 1, an exemplary speech-based system 10 not covered by the claims is illustrated which comprises for example an IP-based telecommunication network 40 using the session initiation protocol (SIP) for establishing, handling and terminating IP-connections through the telecommunication network 40.

In the following, only IP-telephone calls are considered. It is to be noted, that the speech-based system 10 is not limited to the use of IP-based or digital telecommunication networks. Other telecommunication systems can be used for transmitting analog speech signals. Also, the IP-based telecommunication network 40 can be a fixed or a wireless telecommunication network.

Furthermore, the exemplary speech-based system 10 comprises at least one communication apparatus 21. Only for the sake of illustration, a single communication apparatus 20 is shown. It is to be noted, that the communication apparatus 21 may be implemented as a user telephone or a telephone system like a private branch exchange system or a smart home appliance. Only by way of example, it is assumed, that the communication apparatus 20 is a user telephone, for example an IP-capable fixed telephone. The IP-capable telephone 20 comprises a communication interface 24, which may be configured to connect the telephone 20 via a DSL link to the IP-based telecommunication network 40.

The communication device 20 further comprises a data processing unit 22, which may be implemented as a microcontroller. Furthermore, the communication device 20 includes a memory or storage medium 21, which stores a threshold value, the trained classification algorithm, instructions, which cause the data processing unit 22 to divide up incoming speech signals received at the communication interface 24 into signal portions, each portion having a predetermined duration. Preferably, the communication interface 24 comprises a physical network interface. The threshold value depends on the first and second predetermined index value, used by the classification algorithm during its training and can be set for example to 0.8. This means that, if an index value evaluated by the classification algorithm is equal or greater than the threshold value, the speech signals inferred by the classification algorithm belong to natural speech signals. Furthermore, a firmware may also be stored in the memory 21, which may cause the microcontroller 20 to operate, and control and monitor the communication device 20 in a usual manner. Moreover, the communication device 20 may include an output device 23, for example a display.

In addition, the speech-based system 10 may comprise a communication device 50, which is used later on to establish a telephone connection via the IP-based telecommunication network 40 to the telephone 20. Only for the sake of explanation, it is assumed, that the communication device 50 can be used for generating synthetic speech as artificially faked voices intended for transmission via the IP-based telecommunication network 40 to the telephone 20.

Now, the operation of the exemplary speech-based system 10 is explained.

It is assumed, that a telecommunication connection 30 has been established from the communication device 50 to the telephone 20 using, for example, the session initiation protocol and that artificially faked voice, i.e. synthesized speech, is generated by the communication device 50 and transmitted as IP-packets via the IP-based telecommunication network 40 to the telephone device 20 working as the called party. The incoming IP-packets carrying the speech signals are received at the communication interface 24 and delivered to the data processing unit 22 and for example outputted by a loudspeaker (not shown) of the communication device 20 to a user. The data processing unit 22 is configured to read out the instructions from the memory 21, which causes the data processing unit 22 to divide up the incoming speech signals into portions of predetermined duration, also called snippets. For example, the incoming speech signals are cut into 1 second snippets. With other words: Each 1 second snippet comprises speech data of n IP-packets covering a speech signal duration of 1 second. The portions generated by the microcontroller 22 can be stored in the memory 21 or in any other storage medium implemented in the communication device 20. Later on, the data processing unit 22 evaluates an index value by executing the trained classification algorithm stored in the memory 21 on at least one of the portions, and determines or infers in dependence of the first and second predefined index value and in dependence of the index value evaluated, whether the at least one portion belongs to a synthetic speech signal or a natural speech signal. In particular, the determination step is executed by the data processing unit 22 by comparing the evaluated index value with the threshold value stored in the memory 21. If for example the evaluated index value is greater or equal than the threshold value the analyzed incoming speech signals are natural speech signals. However, in the present case, the evaluated index value is lower than the threshold value 0.8, thereby indicating that the incoming and processed speech signals are synthesized speech signals. The threshold value may also be called a scalar danger value.

In order to may inform the user of the telephone 20 that the incoming speech signals is an artificially faked voice, the data processing unit 22 may be configured to generate an alert signal, if, as mentioned above, the evaluated index value is lower than the threshold value. In this case, the data processing unit 22 delivers an alert signal to the output device 23, which is configured to output the alert signal in an optical and/or acoustic form.

Although the communication apparatus 20 has been described as a telephone, it can be for example implemented as a smart phone, smart home appliances like voice-activated door locks or any other voice driven systems, which are open to be deceived by synthetic voices.

It should be noted, that, if incoming speech signals received at the communication interface 24 of the communication device 20 are not digital, but analog signals, an A/D converter can be implemented in the communication apparatus 20, which converts the analog speech signals into respective digital speech signals, which can be processed later on by the data processing unit 22 as described above.

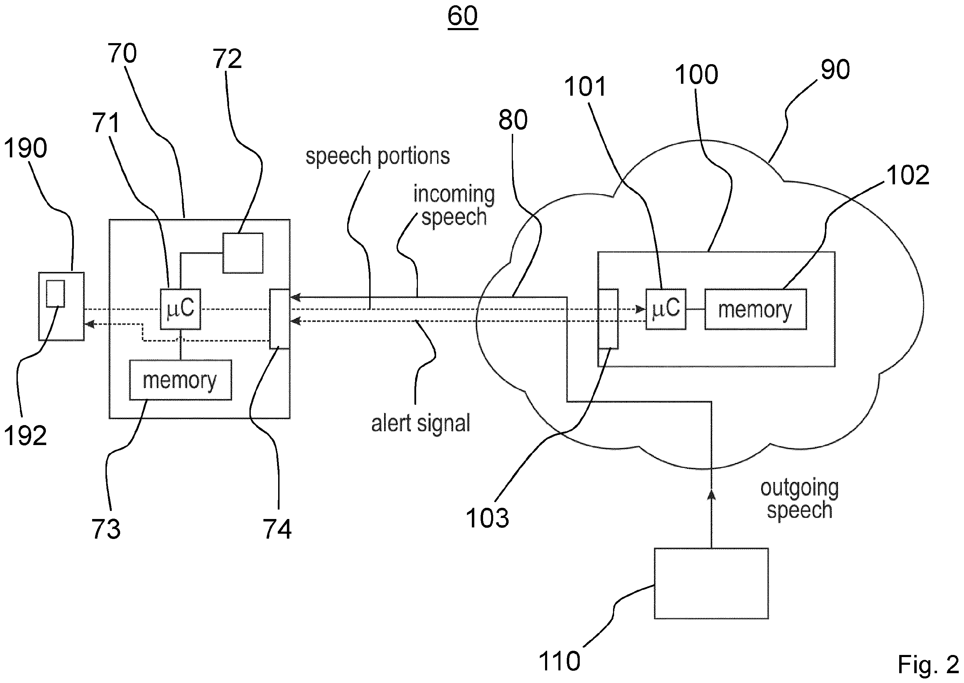

Referring now to figure 2, an exemplary speech-based system 60 is illustrated. Similar to the system 10 of figure 1, the speech-based system 60 may comprise a telecommunication network, for example an IP-based telecommunication network 90, which is implemented and configured to transmit for example digital speech signals in IP-packets from a communication device 110 to a communication apparatus 70.

Similar to communication apparatus 20 the communication apparatus 70 may be a user telephone or a telephone system located at a customer. In the present case, the communication apparatus 70 is implemented as a telephone system, wherein a user telephone 190 is connected to the telephone system 70. Of course, a plurality of communication apparatus 70 can be connected to the IP-based telecommunication network 90. The communication apparatus 70 can be connected in a known manner via a communication interface 74 and via a DSL link to the telecommunication network 90.

In addition, the speech-based system 60 comprises a computational system 100, which, for example, can be integrated into the telecommunication network 90, as is shown in figure 2. It is noted, that the computational system 100 can be operated as an inferencing system.

The communication apparatus 70 is configured to receive IP-packets carrying the speech signals at its communication interface 74, which are transmitted from the communication device 110 over the IP-based telecommunication network 90. In particular, the communication apparatus 70 includes a data processing unit 71 and a memory 73, which stores instructions which cause the data processing unit 21 to divide up the incoming speech signals received at communication interface 74 into portions or snippets of predetermined duration. Similar to data processing unit 21, the data processing unit 71 can be configured to cut the incoming speech signals into a plurality of 1 second snippets. Furthermore, the data processing unit 71 and the communication apparatus 70, respectively, are configured to transmit the 1 second portions to the computational system 100 using the IP-address of the computational system 100. The data processing unit 71, which is configured to divide up incoming speech signals into portions and the computational system 100 can be considered as an inferencing system for detecting synthesized or natural speech.

The dashed line, shown in figure 2, indicates the transmission of the speech portions via communication interface 74 to computational system 100.

As shown in figure 2, the computational system 100 comprises a memory 102 configured to store similar to memory 21 a threshold value and the trained classification algorithm. A communication interface 103 is configured to receive in particular IP-packets carrying the signal portions from the communication apparatus 70. The data processing unit 101 is configured to evaluate an index value by executing the classification algorithm stored in the memory 102 on at least one of the received portions, and furthermore to determine in dependence of the first and second predefined index value and in dependence of the index value evaluated, whether the at least one received portion belongs to a synthesized speech signal or to a natural speech signal. In particular, the determination step is executed by the data processing unit 101 by comparing the evaluated index value with the threshold value stored in the memory 102. If for example the evaluated index value is greater or equal than the threshold value the analyzed signal portions received form the communication apparatus 70 belong to natural speech signals. Otherwise, the analyzed signal portions belong to synthesized speech signals. The threshold value stored in memory 102 may be for example 0.8.

Now the operation of the speech-based system 60 is explained in detail.

Again, it is assumed that a telecommunication connection 80 has been established from the communication device 110 to telephone system as the communication apparatus 70 using, for example, the session initiation protocol. Furthermore, it is assumed that artificially faked voice, i.e. synthesized speech, are generated by the communication device 110 and transmitted in IP-packets via the IP-based telecommunication network 40 to the telephone system 70, which is adapted to forward the IP-packets and the speech signals, respectively, to the telephone 190, working as the called party.

The incoming speech signals received at the communication interface 74 are delivered to the data processing unit 71 and for example outputted by a loudspeaker (not shown) of the telephone 190. The data processing unit 71 is configured to read out the instructions from the memory 73, which causes the data processing unit 71 to divide up the incoming speech signals into portions of predetermined duration, also called snippets. For example, the incoming speech signals are cut into 1 second snippets. With other words: Each 1 second snippet comprises speech data of n IP-packets covering a speech signal duration of 1 second. Later on, the portions generated by the microcontroller 71 are transmitted to the communication interface 103 of the computational system 100.

Now, the data processing unit 101 evaluates an index value by executing the classification algorithm, stored in memory 102, on at least one of the portions received from communication apparatus 70 and determines in dependence of the first and second predefined index value and in dependence of the index value evaluated, whether the at least one portions belongs to a synthesized speech signal or to a natural speech signal. In the present case, it is assumed, that the data processing unit 101 has evaluated an index value lower than the threshold value, indicating that the speech signals transmitted from the communication device 110 to the communication apparatus 70 are synthesized speech signals.

In order to notify the user of the telephone 190 and the telephone system 70 that the ongoing speech conversation with the communication device 110 may be a fake conversation, the data processing unit 101 of the computational system 100 can be configured to generate an alert signal, if the evaluated index value is lower than the threshold value. In this case, the computational system 100 is configured to transmit the alert signal, as shown by the dashed line in figure 2, to the communication apparatus 70 which can be configured, to output the received alert signal in an optical and/or acoustic form, for example on an output device 72.

Simultaneously or alternatively the communication apparatus 70 can be configured to forward the alert signal received from the computational system 100 to the user telephone 190 which in turn can be configured to output the alert signal in an optical and/or acoustic way for example on a display 192.

It should to be noted, that, although the computational system 100 is integrated into the telecommunication network 90, it can be implemented as a cloud system which is connectable to the telecommunication network 90.

Similar to communication apparatus 20 of figure 1, the communication apparatus 70 can be a smart phone, a smart home appliance like a voice-activated door locks or other voice driven systems configured to cut incoming speech signals into signal portions of predetermined duration and to transmit these portions to the computational system 100 for further processing.

It is noted, that the communication apparatus 70 and the computational system 100 can be considered as two separated devices collaborating as an inferencing system to detect in particular malicious synthetic speech during a telephone conversation between telephone 190 and communication device 110.

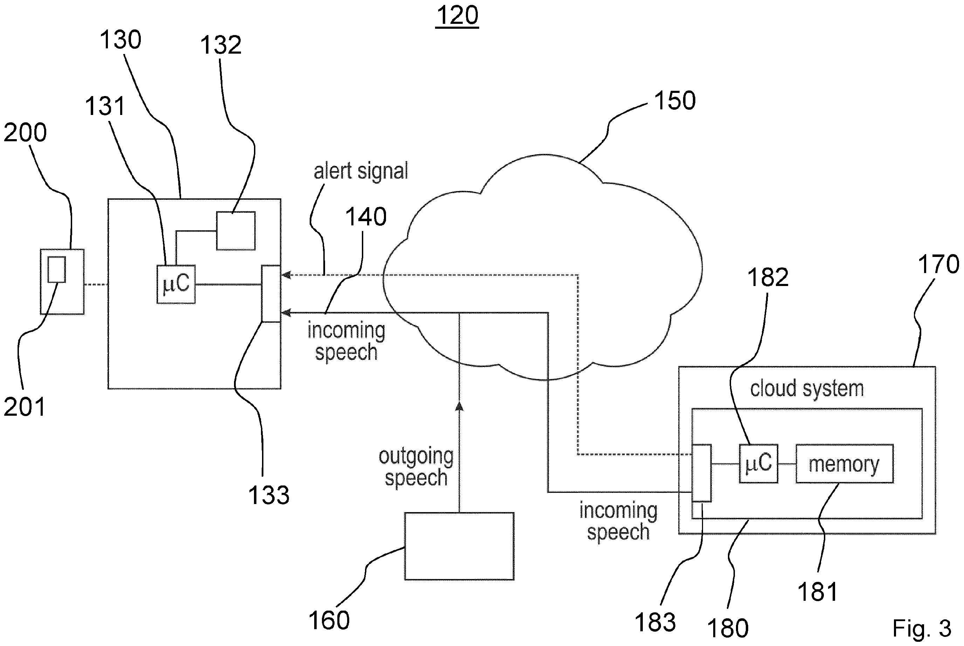

Referring now to figure 3, a further exemplary speech-based system 120 is depicted.

Similar to the system 60 of figure 2, speech-based system 120 may comprise a telecommunication network, for example an IP-based telecommunication network 150, which is implemented and configured to transmit for example digital speech signals in IP-packets from a communication device 160 to a communication apparatus 130. For the sake of illustration, it is assumed, that the communication device 160 can be used for generating outgoing artificially faked voices, i.e. malicious synthesized speech signals.

Similar to communication apparatus 70 the communication apparatus 130 may be a user telephone or a telephone system, for example a private branch exchange system or a smart home appliance, located at a customer or user. In the present case, the communication apparatus 130 is implemented by a telephone system, wherein a user telephone 200 can be connected to the telephone system 130. Of course, a plurality of communication apparatus 130 can be connected to the IP-based telecommunication network 150.

The communication apparatus 130 includes a communication interface 133, which can be connected, for example via a DSL line to the telecommunication network 150. The communication interface 133 is configured to receive incoming speech signals transmitted in IP-packets for example from the communication device 160 over the telecommunication network 150. The communication interface 133 may comprise a physical network interface.

Furthermore, the exemplary speech-based system 120 comprises a computational system 180, which can be integrated into a cloud system 170. The computational system comprises a data processing unit 182 and a memory 181 which can store a threshold value, the trained classification algorithm, instructions causing the data processing unit 182 to divide up speech signals received at a communication interface 183. For example, the speech signals may be generated and transmitted by the communication device 160 and may be destined for the communication apparatus 130. Communication apparatus 130 includes a data processing unit 131, which is configured to monitor, control and operate the communication apparatus in a known manner.

Now the operation of the exemplary speech-based system 120 is described in connection with figure 3.

It is assumed, that communication device 160 has generated faked synthesized outgoing speech signals destined for the communication apparatus 130. In a preferred embodiment, the communication device 160 uses the SIP protocol to establish a connection via the telecommunication network 150 to the communication apparatus 130 and the telephone 200, respectively.

Now, there are, for example, two possibilities to deliver the outgoing speech signals from the communication device 160 to the cloud-based computational system 180. One way is to transmit the outgoing speech signals from communication 160 via the telecommunication network 150 to the communication apparatus 130, which in turn can be configured to forward the incoming speech signals to the telephone 200 and simultaneously forward the incoming speech signals via the telecommunication network 150 to the computational system 180 using its IP-address. In this case, the communication apparatus 130 knows the IP address of the computational system 180.

In a second way, the telecommunication network 150 can be configured to detect, for example, speech signals coming from communication device 160 and to decide in dependence of the called destination, e.g. the communication apparatus 130 and the telephone 200, respectively, that the speech signals destined for the telephone 200 are to be transmitted to the communication interface 133 of the communication apparatus 130 and also to the communication interface 183 of the cloud-based computational system 180.

In any case, once IP-packets carrying speech signals have been received at communication interface 183, the speech signals are delivered to the data processing unit 182, which is caused by the instructions and the classification algorithm stored in memory 181
i) to divide up the speech signals received at the communication interface 183 into portions of predetermined duration,
ii) to evaluate an index value by executing the classification algorithm stored in the memory 181 on at least one of the portions, and
iii) to determine in dependence of the first and second predefined index value and in dependence of the index value evaluated, whether the at least one portion belongs to a synthesized speech signal or to a natural speech signal.

In particular, the determination step is executed by the data processing unit 182 by comparing the evaluated index value with the threshold value stored in the memory 181. If for example the evaluated index value is greater or equal than the threshold value, e.g. 0.8, the analyzed incoming speech signals received at the communication interface 183 are natural speech signals. However, in the present case, the evaluated index value is lower than the threshold value 0.8, thereby indicating that the incoming and analyzed speech signals are malicious synthesized speech signals.

In order to notify the user of the telephone 200 and the telephone system 130, that the ongoing speech conversation with the communication device 160 may be a fake conversation, the data processing unit 182 of the computational system 180 is configured to generate an alert signal, if the evaluated index value is lower than the threshold value stored in memory 181.

Now the computational system 180 transmits the alert signal to the communication apparatus 130 via the telecommunication network 150 as depicted by the dashed line in figure 3. The alert signal is received by the communication interface 133 and can be output in optical and/or acoustic form for example on an output device 132 of the communication apparatus 130 and or forwarded to the telephone 200, which may be adapted to output the alert signal in an optical and/or acoustic form via an output device 201.

It is noted, that the computational system 180 can be alternatively integrated into the telecommunication network 150, as shown in figure 2 with respect to the computational system 100.

Although, the exemplary speech-based systems 10, 60 and 120 are illustrated in connection with SIP-initiated telephone calls transmitted via IP-based telecommunication networks any other fixed or wireless transmission system can be used for transmitting speech signals or signal portions between a communication apparatus and a computational system.

## Claims

1. A speech-based system (120) for automatically detecting synthesized or natural speech, comprising
- a telecommunication network (150),
- at least one communication apparatus (130) connected to the telecommunication network (150) and configured to receive speech signals from a further communication device (160), the speech signals being transmitted over the telecommunication network (150),
- a computational system (180) comprising the following features:
- a memory (181) configured to store a classification algorithm, which has been trained by using a plurality of first training sets of data, each first training set of data representing a portion of a synthesized speech signal, each portion having a predetermined duration, and a plurality of second training sets of data, each second training set of data representing a portion of a natural speech signal, each portion having a predetermined duration, wherein the classification algorithm evaluates a first predefined index value, whenever one of the plurality of first training sets of data is used thereby indicating a synthesized speech, and wherein the classification algorithm evaluates a second predefined index value whenever one of the plurality of second training sets of data is used thereby indicating a natural speech,
- a communication interface (183) configured to receive speech signals addressed to the at least one communication apparatus (130),
- a data processing unit (182) configured to
i) divide up the speech signals received at the communication interface (183) into portions, each portion having a predetermined duration,
ii) to evaluate an index value by executing the classification algorithm stored in the memory (181) on at least one of the portions, and
iii) to determine in dependence of the first and second predefined index value and in dependence of the index value evaluated, whether the at least one portion belongs to a synthesized speech signal or to a natural speech signal.

2. The speech-based system (120) of claim 1,
wherein the data processing unit (182) of the computational system (180) is configured to generate an alert signal, if the at least one portion has been determined by the data processing unit to belong to a synthesized speech signal, wherein the computational system (180) is configured to transmit the alert signal to the at least one communication apparatus (130), which is configured to output the alert signal in an optical and/or acoustic form.

3. The speech-based system (120) of claim 1 or 2,
wherein
a telephone (200) is connected to the at least one communication apparatus (130),
the at least one communication apparatus (130) is configured to forward the incoming speech signals received from the communication apparatus (160) to the telephone (200) and simultaneously via the telecommunication network (150) to the computational system (180) using its IP-address.

4. The speech-based system (120) of claim 1 or 2,
wherein
a telephone (200) is connected to the at least one communication apparatus (130), and wherein
the telecommunication network (150) is configured to detect speech signals coming from the further communication device (160) and destined for the telephone (200) and to decide that the speech signals destined for the telephone (200) are to be transmitted to a communication interface (133) of the communication apparatus (130) and also to the communication interface (183) of the computational system (180).

5. The speech-based system according to any one of the claims 1 to 4,
wherein the computational system (180) is a cloud-based system connected to the telecommunication network (150), or
wherein the computational system (180) is integrated into the telecommunication network (150).

6. A speech-based system (60) for automatically detecting synthesized or natural speech, comprising
- a telecommunication network (90),
- a computational system (100),
- at least one communication apparatus (70) connected to the telecommunication network (90) and configured to receive speech signals transmitted from a further communication device (110) over the telecommunication network (90), to divide up the received speech signals into portions, each portion having a predetermined duration, and to transmit the portions to the computational system (100), the computational system (100) comprising the following features:
- a memory (102) configured to store a classification algorithm, which has been trained by using a plurality of first training sets of data, each first training set of data representing a portion of a synthesized speech signal, each portion having a predetermined duration, and a plurality of second training sets of data, each second training set of data representing a portion of a natural speech signal, each portion having a predetermined duration, wherein the classification algorithm evaluates a first predefined index value, whenever one of the plurality of first training sets of data is used thereby indicating a synthesized speech, and wherein the classification algorithm evaluates a second predefined index value whenever one of the plurality of second training sets of data is used thereby indicating a natural speech,
- a communication interface (103) configured to receive portions from the at least one communication apparatus (70),
- a data processing unit (101) configured to
i) to evaluate an index value by executing the classification algorithm stored in the memory on at least one of the portions, and
ii) to determine in dependence of the first and second predefined index value and in dependence of the index value evaluated, whether the at least one portion belongs to a synthesized speech signal or to a natural speech signal.

7. The speech-based system (60) of claim 6,
wherein the data processing unit (101) of the computational system (100) is configured to generate an alert signal, if the at least one portion has been determined by the data processing unit (101) to belong to a synthesized speech signal, wherein the computational system (100) is configured to transmit the alert signal to the at least one communication apparatus (70), which is configured to output the alert signal in an optical and/or acoustic form.

8. The speech-based system of claim 6 or 7,
wherein the computational system (100) is a cloud-based system connected to the telecommunication network (90), or
wherein the computational system (100) is integrated into the telecommunication network (90).

9. The speech-based system of any one of the claims 1 to 8,
wherein the at least one communication apparatus ( 70, 130) comprises a user terminal and/or a telephone system.

## Patentansprüche

1. Sprachbasiertes System (120) zum automatischen Erkennen von synthetisierter oder natürlicher Sprache, aufweisend
- ein Telekommunikationsnetzwerk (150),
- mindestens einer Kommunikationseinrichtung (130), die mit dem Telekommunikationsnetzwerk (150) verbunden und dazu ausgebildet ist, Sprachsignale von einer weiteren Kommunikationseinrichtung (160) zu empfangen, wobei die Sprachsignale über das Telekommunikationsnetzwerk (150) übertragen werden,
- ein Rechensystem (180), das die folgenden Merkmale umfasst:
- einen Speicher (181), der dazu ausgebildet ist, einen Klassifizierungsalgorithmus zu speichern, der unter Verwendung einer Vielzahl von ersten Trainingsdatensätzen, wobei jeder erste Trainingsdatensatz einen Abschnitt eines synthetisierten Sprachsignals darstellt, wobei jeder Abschnitt eine vorbestimmte Dauer aufweist, und einer Vielzahl von zweiten Trainingsdatensätzen trainiert wurde, wobei jeder zweite Trainingsdatensatz einen Abschnitt eines natürlichen Sprachsignals darstellt, wobei jeder Abschnitt eine vorbestimmte Dauer aufweist, wobei der Klassifizierungsalgorithmus einen ersten vordefinierten Indexwert auswertet, wenn einer der mehreren ersten Trainingsdatensätze verwendet wird, wodurch eine synthetisierte Sprache angezeigt wird, und wobei der Klassifizierungsalgorithmus einen zweiten vordefinierten Indexwert auswertet, wenn einer der mehreren zweiten Trainingsdatensätze verwendet wird, wodurch eine natürliche Sprache angezeigt wird,
- eine Kommunikationsschnittstelle (183), die dazu ausgebildet ist, Sprachsignale zu empfangen, die an die mindestens eine Kommunikationseinrichtung (130) gerichtet sind,
- eine Datenverarbeitungseinheit (182), die dazu ausgebildet ist,
i) die an der Kommunikationsschnittstelle (183) empfangenen Sprachsignale in Abschnitte aufzuteilen, wobei jeder Abschnitt eine vorbestimmte Dauer aufweist,
ii) einen Indexwert durch Ausführen des in dem Speicher (181) gespeicherten Klassifizierungsalgorithmus auf mindestens einen der Abschnitte zu bewerten, und
iii) in Abhängigkeit von dem ersten und zweiten vordefinierten Indexwert und in Abhängigkeit von dem bewerteten Indexwert zu bestimmen, ob der mindestens eine Abschnitt zu einem synthetisierten Sprachsignal oder zu einem natürlichen Sprachsignal gehört.

2. Sprachbasiertes System (120) nach Anspruch 1, wobei die Datenverarbeitungseinheit (182) des Rechensystems (180) dazu ausgebildet ist, ein Alarmsignal zu erzeugen, wenn der mindestens eine Abschnitt von der Datenverarbeitungseinheit als zu einem synthetisierten Sprachsignal gehörend bestimmt wurde, wobei das Rechensystem (180) dazu ausgebildet ist, das Alarmsignal an die mindestens eine Kommunikationseinrichtung (130) zu übertragen, die dazu ausgebildet ist, das Alarmsignal in einer optischen und/oder akustischen Form auszugeben.

3. Sprachbasierte System (120) nach Anspruch 1 oder 2, wobei
ein Telefon (200) mit der mindestens einen Kommunikationseinrichtung (130) verbunden ist,
die mindestens eine Kommunikationseinrichtung (130) dazu ausgebildet ist, die von der Kommunikationseinrichtung (160) empfangenen eingehenden Sprachsignale an das Telefon (200) und gleichzeitig über das Telekommunikationsnetzwerk (150) an das Rechensystem (180) unter Verwendung seiner IP-Adresse weiterzuleiten.

4. Sprachbasiertes System (120) nach Anspruch 1 oder 2, wobei
ein Telefon (200) mit der mindestens einen Kommunikationseinrichtung (130) verbunden ist, und wobei
das Telekommunikationsnetzwerk (150) dazu ausgebildet ist, Sprachsignale zu erkennen, die von der weiteren Kommunikationseinrichtung (160) kommen und für das Telefon (200) bestimmt sind, und zu entscheiden, dass die für das Telefon (200) bestimmten Sprachsignale an eine Kommunikationsschnittstelle (133) der Kommunikationseinrichtung (130) und auch an die Kommunikationsschnittstelle (183) des Rechensystems (180) zu übertragen sind.

5. Sprachbasiertes System nach einem der Ansprüche 1 bis 4,
wobei das Rechensystem (180) ein Cloud-basiertes System ist, das mit dem Telekommunikationsnetzwerk (150) verbunden ist, oder
wobei das Rechensystem (180) in das Telekommunikationsnetzwerk (150) integriert ist.

6. Sprachbasiertes System (60) zum automatischen Erkennen von synthetisierter oder natürlicher Sprache, mit
- einem Telekommunikationsnetzwerk (90),
- einem Rechensystem (100),
- mindestens einer Kommunikationseinrichtung (70), die mit dem Telekommunikationsnetzwerk (90) verbunden und dazu ausgebildet ist, Sprachsignale zu empfangen, die von einer weiteren Kommunikationseinrichtung (110) über das Telekommunikationsnetzwerk (90) übertragen werden, die empfangenen Sprachsignale in Abschnitte aufzuteilen, wobei jeder Abschnitt eine vorbestimmte Dauer hat, und die Abschnitte an das Rechensystem (100) zu übertragen, wobei das Rechensystem (100) die folgenden Merkmale umfasst:
- einen Speicher (102), der dazu ausgebildet ist, einen Klassifizierungsalgorithmus zu speichern, der unter Verwendung einer Vielzahl von ersten Trainingsdatensätzen, wobei jeder erste Trainingsdatensatz einen Abschnitt eines synthetisierten Sprachsignals darstellt, wobei jeder Abschnitt eine vorbestimmte Dauer aufweist, und einer Vielzahl von zweiten Trainingsdatensätzen trainiert wurde, wobei jeder zweite Trainingsdatensatz einen Abschnitt eines natürlichen Sprachsignals darstellt, wobei jeder Abschnitt eine vorbestimmte Dauer aufweist, wobei der Klassifizierungsalgorithmus einen ersten vordefinierten Indexwert auswertet, wenn einer der mehreren ersten Trainingsdatensätze verwendet wird, wodurch eine synthetisierte Sprache angezeigt wird, und wobei der Klassifizierungsalgorithmus einen zweiten vordefinierten Indexwert auswertet, wenn einer der mehreren zweiten Trainingsdatensätze verwendet wird, wodurch eine natürliche Sprache angezeigt wird,
- eine Kommunikationsschnittstelle (103), die dazu ausgebildet ist, Abschnitte von der mindestens einen Kommunikationsvorrichtung (70) zu empfangen,
- eine Datenverarbeitungseinheit (101), die dazu ausgebildet ist,
i) einen Indexwert zu bewerten, indem der im Speicher gespeicherte Klassifizierungsalgorithmus auf mindestens einem der Abschnitte ausgeführt wird, und
ii) in Abhängigkeit von dem ersten und zweiten vordefinierten Indexwert und in Abhängigkeit von dem bewerteten Indexwert zu bestimmen, ob der mindestens eine Abschnitt zu einem synthetisierten Sprachsignal oder zu einem natürlichen Sprachsignal gehört.

7. Sprachbasiertes System (60) nach Anspruch 6, wobei die Datenverarbeitungseinheit (101) des Rechensystems (100) dazu ausgebildet ist, ein Alarmsignal zu erzeugen, wenn der mindestens eine Abschnitt von der Datenverarbeitungseinheit (101) als zu einem synthetisierten Sprachsignal gehörend bestimmt wurde, wobei das Rechensystem (100) dazu ausgebildet ist, das Alarmsignal an die mindestens eine Kommunikationsvorrichtung (70) zu übertragen, die dazu ausgebildet ist, das Alarmsignal in optischer und/oder akustischer Form auszugeben.

8. Sprachbasiertes System nach Anspruch 6 oder 7,
wobei das Rechensystem (100) ein Cloud-basiertes System ist, das mit dem Telekommunikationsnetzwerk (90) verbunden ist, oder
wobei das Rechensystem (100) in das Telekommunikationsnetzwerk (90) integriert ist.

9. Sprachbasiertes System nach einem der Ansprüche 1 bis 8,
wobei die mindestens eine Kommunikationseinrichtung (70, 130) ein Benutzerendgerät und/oder eine Telefonanlage umfasst.

## Revendications

1. Système basé sur la parole (120) pour détecter automatiquement une parole synthétisée ou naturelle, comprenant
- un réseau de télécommunication (150),
- au moins un appareil de communication (130) connecté au réseau de télécommunication (150) et configuré pour recevoir des signaux de parole depuis un autre dispositif de communication (160), les signaux de parole étant transmis sur le réseau de télécommunication (150),
- un système informatique (180) comprenant les caractéristiques suivantes :
- une mémoire (181) configurée pour stocker un algorithme de classification, qui a été entraîné à l'aide d'une pluralité de premiers jeux de données d'entraînement, chaque premier jeu de données d'entraînement représentant une partie d'un signal de parole synthétisée, chaque partie présentant une durée prédéterminée, et une pluralité de deuxièmes jeux de données d'entraînement, chaque deuxième jeu de données d'entraînement représentant une partie d'un signal de parole naturelle, chaque partie présentant une durée prédéterminée, dans lequel l'algorithme de classification évalue une première valeur d'indice prédéfinie chaque fois que l'un de la pluralité de premiers jeux de données d'entraînement est utilisé en indiquant ainsi une parole synthétisée, et dans lequel l'algorithme de classification évalue une deuxième valeur d'indice prédéfinie chaque fois que l'un de la pluralité de deuxièmes jeux de données d'entraînement est utilisé en indiquant ainsi une parole naturelle,
- une interface de communication (183) configurée pour recevoir des signaux de parole adressés à l'au moins un appareil de communication (130),
- une unité de traitement de données (182) configurée pour
i) diviser les signaux de parole reçus au niveau de l'interface de communication (183) en parties, chaque partie présentant une durée prédéterminée,
ii) évaluer une valeur d'indice par l'exécution de l'algorithme de classification stocké dans la mémoire (181) sur au moins l'une des parties, et
iii) déterminer, en fonction des première et deuxième valeurs d'indice prédéfinies et en fonction de la valeur d'indice évaluée, si l'au moins une partie appartient à un signal de parole synthétisée ou à un signal de parole naturelle.

2. Système basé sur la parole (120) selon la revendication 1,
dans lequel l'unité de traitement de données (182) du système informatique (180) est configurée pour générer un signal d'alerte, si l'unité de traitement de données a déterminé que l'au moins une partie appartient à un signal de parole synthétisée, dans lequel le système informatique (180) est configuré pour transmettre le signal d'alerte à l'au moins un appareil de communication (130), qui est configuré pour délivrer le signal d'alerte sous une forme optique et/ou acoustique.

3. Système basé sur la parole (120) selon la revendication 1 ou 2,
dans lequel
un téléphone (200) est connecté à l'au moins un appareil de communication (130),
l'au moins un appareil de communication (130) est configuré pour acheminer les signaux de parole entrants reçus depuis l'appareil de communication (160) vers le téléphone (200) et simultanément via le réseau de télécommunication (150) vers le système informatique (180) à l'aide de son adresse IP.

4. Système basé sur la parole (120) selon la revendication 1 ou 2,
dans lequel
un téléphone (200) est connecté à l'au moins un appareil de communication (130), et dans lequel
le réseau de télécommunication (150) est configuré pour détecter des signaux de parole provenant de l'autre dispositif de communication (160) et destinés au téléphone (200) et pour décider que les signaux de parole destinés au téléphone (200) doivent être transmis à une interface de communication (133) de l'appareil de communication (130) et également à l'interface de communication (183) du système informatique (180).

5. Système basé sur la parole selon l'une quelconque des revendications 1 à 4,
dans lequel le système informatique (180) est un système basé sur le cloud connecté au réseau de télécommunication (150), ou
dans lequel le système informatique (180) est intégré dans le réseau de télécommunication (150).

6. Système basé sur la parole (60) pour détecter automatiquement une parole synthétisée ou naturelle, comprenant
- un réseau de télécommunication (90),
- un système informatique (100),
- au moins un appareil de communication (70) connecté au réseau de télécommunication (90) et configuré pour recevoir des signaux de parole transmis depuis un autre dispositif de communication (110) sur le réseau de télécommunication (90), pour diviser les signaux de parole reçus en parties, chaque partie présentant une durée prédéterminée, et pour transmettre les parties au système informatique (100), le système informatique (100) comprenant les caractéristiques suivantes :
- une mémoire (102) configurée pour stocker un algorithme de classification, qui a été entraîné à l'aide d'une pluralité de premiers jeux de données d'entraînement, chaque premier jeu de données d'entraînement représentant une partie d'un signal de parole synthétisée, chaque partie présentant une durée prédéterminée, et une pluralité de deuxièmes jeux de données d'entraînement, chaque deuxième jeu de données d'entraînement représentant une partie d'un signal de parole naturelle, chaque partie présentant une durée prédéterminée, dans lequel l'algorithme de classification évalue une première valeur d'indice prédéfinie chaque fois que l'un de la pluralité de premiers jeux de données d'entraînement est utilisé en indiquant ainsi une parole synthétisée, et dans lequel l'algorithme de classification évalue une deuxième valeur d'indice prédéfinie chaque fois que l'un de la pluralité de deuxièmes jeux de données d'entraînement est utilisé en indiquant ainsi une parole naturelle,
- une interface de communication (103) configurée pour recevoir des parties depuis l'au moins un appareil de communication (70),
- une unité de traitement de données (101) configurée pour
i) évaluer une valeur d'indice par l'exécution de l'algorithme de classification stocké dans la mémoire sur au moins l'une des parties, et
ii) déterminer, en fonction des première et deuxième valeurs d'indice prédéfinies et en fonction de la valeur d'indice évaluée, si l'au moins une partie appartient à un signal de parole synthétisée ou à un signal de parole naturelle.

7. Système basé sur la parole (60) selon la revendication 6,
dans lequel l'unité de traitement de données (101) du système informatique (100) est configurée pour générer un signal d'alerte, si l'unité de traitement de données (101) a déterminé que l'au moins une partie appartient à un signal de parole synthétisée, dans lequel le système informatique (100) est configuré pour transmettre le signal d'alerte à l'au moins un appareil de communication (70), qui est configuré pour délivrer le signal d'alerte sous une forme optique et/ou acoustique.

8. Système basé sur la parole selon la revendication 6 ou 7,
dans lequel le système informatique (100) est un système basé sur le cloud connecté au réseau de télécommunication (90), ou
dans lequel le système informatique (100) est intégré dans le réseau de télécommunication (90).

9. Système basé sur la parole selon l'une quelconque des revendications 1 à 8,
dans lequel l'au moins un appareil de communication (70, 130) comprend un terminal utilisateur et/ou un système téléphonique.
